# EUROPEAN PATENT SPECIFICATION

(11) **EP 2 412 146 B1**
(45) Date of publication and mention of the grant of the patent: **07.03.2018**
(21) Application number: 10711515.6
(22) Date of filing: 24.03.2010
(51) Int. Cl.: H04W 4/16, H04W 4/20, H04L 29/08, G06Q 30/02

(54) **METHODS AND APPARATUS FOR ADVERTISEMENT MIXING IN A COMMUNICATION SYSTEM**
VERFAHREN UND VORRICHTUNG ZUM MISCHEN VON WERBUNG IN EINEM KOMMUNIKATIONSSYSTEM
PROCÉDÉS ET APPAREIL ADAPTÉS POUR EXÉCUTER UN MÉLANGE D'ANNONCES PUBLICITAIRES DANS UN SYSTÈME DE COMMUNICATION

(30) Priority: 24.03.2009 US 162772 P; 16.06.2009 US 485702
(43) Date of publication of application: 01.02.2012
(73) Proprietor: Qualcomm Incorporated, San Diego, CA 92121 (US)
(72) Inventor: RAJARSHI, Ray, San Diego CA 92121 (US)
(74) Representative: Wegner, Hans
(86) International application number: PCT/US2010/028545
(87) International publication number: WO 2010/111425

(56) References cited:
- WO-A1-02/23423
- WO-A2-2007/081826
- US-A1- 2006 109 969
- US-A1- 2006 123 091
- US-A1- 2007 047 728
- US-A1- 2007 201 636
- US-A1- 2008 101 554

## Description

### BACKGROUND

### Field

The present application relates generally to the operation of wireless communication systems, and more particularly, to methods and apparatus for advertisement mixing in a communication system.

### Background

Services offered by today's carriers and service providers, such as, Caller Identification (ID) or Caller Ring-Back Tones (CRBTs), allow the user to see the phone number of the caller on a display or hear a ringing tone when placing a call. The carriers generally offer these features as premium services and charge additional fees to the user. In the caller ID case, the phone generally displays the caller identification information. In the CRBT case, the caller hears a pre-selected ring-tone and generally has no option to skip it or alter it. In both of these cases, and in other similar call services, such as call transfer, hold, three-way conferencing, etc, these services operate to provide to the device users only basic information associated with the particular service.

The network carriers and service providers would like to have mechanisms to allow various advertisements (ADs) to be presented to device users in order to generate more revenue from the same user-base. For example, the advertisements may be context-based, location-based or even time-based advertisements. For example, a location-based advertisement is associated with the device user's current geographic location and may be offered to allow the device user to take advantage of special promotions offered within the local region. Context-based advertisements are associated with a device user's history or profile so that selected advertisements can be targeted to specific device users. Time-based advertisements are designed to be viewed by device users at a particular time of day.

A system and a method for providing ring-back content are known from US 2007/0047728 A1. The ring-back content may be advertisements specified by a subscriber and provided to a caller of the subscriber. The subscriber may register a list of multimedia caller information service tags, each associated with one or more different pieces of content to be displayed. An operator may use an automated algorithm to select one of the tags and send the content associated with the tag to the caller. The selection may be based inter alia on the caller's location or the caller's ID.

Also US 2006/0109969 A1 describes an advertisement service using a ring-back tone. An advertisement message is extracted from an advertisement database and transmitted to an originator terminal requesting a call. The transmission of advertisements may be based inter alia on the individual customer or the location of the originator.

US 2008/0101554 A1 describes a voice/text/image commercial information generating method and device during a communication is on wait. The commercial information is transmitted instead of the original ring-back tone.

WO 02/23423 A1 relates to another advertisement method in a wireless communication network. A mobile communication terminal subscriber may register as a member, so that if a call request is received from an arbitrary originator advertisement data is transmitted to the mobile communication terminal of the recipient. The subscriber may have the benefit of communication charge discount by clicking an advertisement one time when using the Internet.

There is still a need for a more efficient way of mixing advertisement with a call service.

The invention provides a solution according to the independent claims.

### SUMMARY

In one or more aspects, an AD mixer system, comprising methods and apparatus, is provided that operates to present advertisements to device users when utilizing a variety of call services in a communication network.

In an aspect, a method is provided that is operable by a network node for providing advertisements in a communication network. The method comprises determining an advertisement associated with a communication device, mixing the advertisement with a call service to be provided to the communication device, and transmitting the advertisement and the call service to the communication device.

In an aspect, an apparatus for providing advertisements in a communication network is disclosed. The apparatus comprises means for determining an advertisement associated with a communication device, means for mixing the advertisement with a call service to be provided to the communication device, and means for transmitting the advertisement and the call service to the communication device.

In an aspect, an apparatus for providing advertisements in a communication network is disclosed. The apparatus comprises a generator module configured to determine an advertisement associated with a communication device, a mixing module configured to mix the advertisement with a call service to be provided to the communication device, and a transmitter configured to transmit the advertisement and the call service to the communication device.

In an aspect, a computer program product for providing advertisements in a communication network is disclosed. The computer program produce comprises a computer-readable medium embodying codes executable to determine an advertisement associated with a communication device, mix the advertisement with a call service to be provided to the communication device, and transmit the advertisement and the call service to the communication device.

In an aspect, a method is provided that is operable by a communication device for providing advertisements in a communication network. The method comprises receiving a call service, obtaining an advertisement associated with the call service, and rendering the advertisement on a communication device.

In an aspect, an apparatus for providing advertisements in a communication network is disclosed. The apparatus comprises means for receiving a call service, means for obtaining an advertisement associated with the call service, and means for rendering the advertisement.

In an aspect, an apparatus for providing advertisements in a communication network is disclosed. The apparatus comprises a receiver configured to receive a call service, processing module configured to obtain an advertisement associated with the call service, and rendering module configured to render the advertisement.

In an aspect, a computer program product for providing advertisements in a communication network is disclosed. The computer program product comprises a computer-readable medium embodying codes executable to receive a call service, obtain an advertisement associated with the call service, and render the advertisement.

Other aspects will become apparent after review of the hereinafter set forth Brief Description of the Drawings, Description, and the Claims.

### BRIEF DESCRIPTION OF THE DRAWINGS

The foregoing aspects described herein will become more readily apparent by reference to the following Description when taken in conjunction with the accompanying drawings wherein:
**FIG. 1** shows an exemplary communication network that illustrates aspects of an AD mixer system;
**FIG. 2** shows an exemplary AD server for use in aspects of an AD mixer system;
**FIG. 3** shows an exemplary method for mixing ADs with call services for use in aspects of an AD mixer system;
**FIG. 4** shows an exemplary method for generating ADs for use in aspects of an AD mixer system;
**FIG. 5** shows an exemplary method for providing AD mixing for call origination services for use in aspects of an AD mixer system;
**FIG. 6** shows an exemplary method for providing AD mixing for call destination services for use in aspects of an AD mixer system;
**FIG. 7** shows an exemplary AD receiver for use in aspects of an AD mixer system;
**FIG. 8** shows an exemplary method for receiving ADs mixed with call services for use in aspects of an AD mixer system;
**FIG. 9** shows an exemplary AD server for use in aspects of an AD mixer system; and
**FIG. 10** shows exemplary AD receiver for use in aspects of an AD mixer system.

### DESCRIPTION

The following description describes aspects of an AD mixer system that operates to present advertisements to device users when utilizing a variety of call services in a communication network. For example, the system operates to generate and mix advertisements or any other information with call services to be provided to one or more devices. The advertisements are rendered on the devices during the call service or may be stored and rendered at a later time. For example, the ADs comprise images, text, audio, video, animations, or any other type of AD content. The ADs may be static or interactive so that device users may interact with the advertisements to obtain more information, additional ADs, enable AD forwarding, or to initiate any other type of service or AD processing.

In various aspects, the AD mixer system comprises an AD server and an AD mixer that operate to provide location-based, context-based, and/or time-based advertisements. In an aspect, the AD mixer system operates to render different types of multimedia ADs on a device display and/or through device speakers when selected call services are provided. For example, based on the nature of the call and the location of the device, selected regional ADs are presented to the user on a device display. In the case of the CRBT, ADs are provided in audio format. The user is defined as the person receiving the call in the case of the caller ID or the person originating the call in the case of the CRBT. In either case, the AD mixer system determines the user's location from one of a corresponding home location register (HLR) and visiting location register (VLR), or from information determined from a GPS device on the user's handset. Once the location is determined, an appropriate AD will be selected (randomly, or based on the user's profile, if desired) and subsequently mixed into the audio/video stream being transmitted to the user. The user will be subsequently given the option to interact with the AD through soft-buttons on the display or various keys placed on the handset keyboard. In another aspect, the ADs can also be selected by means of built-in intelligence in the communication system based on a user profile (i.e., past history, habits and/or patterns). Some of this historical information can be retrieved from the carrier's database or the local memory of the user's handset.

The advertisements provide additional revenue sources for carriers or service providers. In fact, the underlying service may be offered free to the user and still generate sufficient AD revenue for the carrier. For example, in an aspect, a pre-paid user may receive free additional call minutes for participating and/or opting in to receive advertisements.

In the case of a caller ID service with ADs, the user will be given an option to answer the call, not answer the call but respond to the advertisement only, or do nothing. In the case of the CRBT, the caller will have the option to bypass the ringtone selected by the called party and listen to some advertisements instead (for a discounted charge for the call). To make these advertisements relevant to the users, the ADs are made contextual or location-based (or time-based, for example, ADs for night-time products will only be offered during the evening or night-time), depending on the location of the called party in the case of the caller ID or the location of the caller in case of the CRBTs. ADs can also be mixed in with other typical communication services, such as, 3-way calling, multi-party conference calls, video telephony, call hold and call transfer.

The AD mixer system results in tremendous benefits to the carrier, device user, and also the advertisers. With respect to the carrier, there is additional source of revenue for each call placed (i.e., through advertisement). With respect to the user, the advertisements can subsidize the cost of the call and provide relevant information to the user based on his location or context. The ADs may also offer the user an opportunity to interact with the AD which may entail a coupon, a concert ticket or a free ringtone or wallpaper. The user may also save the coupon and/or forward the call to his friends along with the coupon. With respect to the advertiser, more opportunities are provided to promote products to more people.

In an aspect, one or more ADs can be pushed to the user's handset during off-peak periods (e.g., night-time) on a daily, weekly or monthly basis. In the next few days, as the user participates in various communication services as a part of his/her daily activities, these ADs will be presented to the user.

The system is especially well suited for use in wireless network environments, but may be used in any type of network environment, including but not limited to, communication networks, public networks, such as the Internet, private networks, such as virtual private networks (VPN), local area networks, wide area networks, long haul network, or any other type of network.

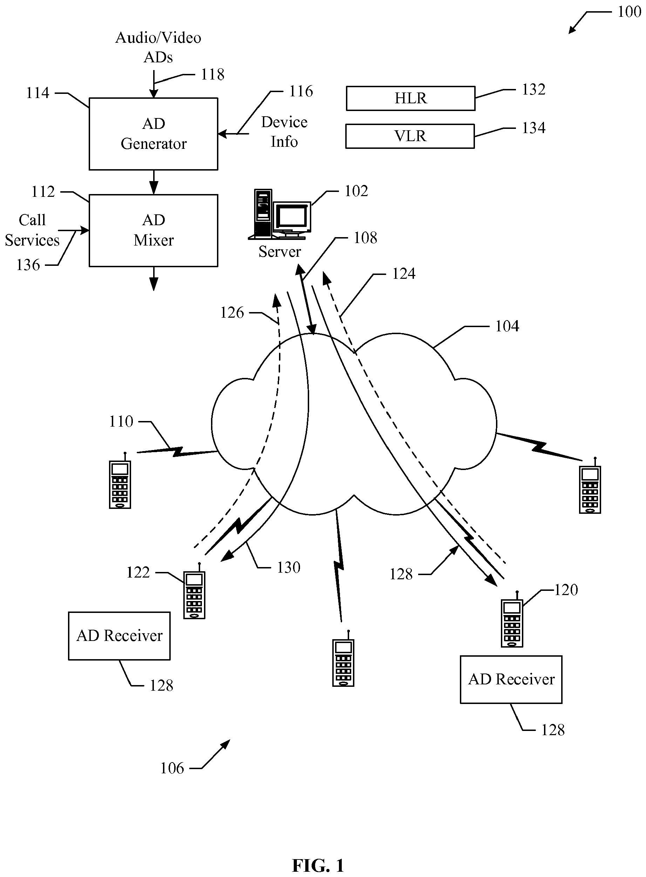

**FIG. 1** shows a network **100** that illustrates aspects of an AD mixer system. The network **100** comprises AD server **102**, network **104**, and a plurality of devices shown generally at **106**. The network **104** may be any type and/or combination of wired and wireless networks that allow data to be transmitted between the server **102** and the devices **106**. Thus, the primary function of the network **104** is to facilitate communication between devices. The AD server **102** is coupled to the network **104** via the communication link **108**, which may be any type of wired and/or wireless communication link that allows the AD server **102** to communicate with the network **104**. The devices **106** comprise a mobile telephone, PDA, notebook computer, pager, email device, or any other type of device that is operable to communicate with the network **104**. The devices **106** are in communication with the network **104** via wireless communication links **110**, which allows data, voice or other information to be wirelessly transmitted between the network **104** and the devices **106**. In an aspect, the wireless communication links **110** comprises forward communication channels, reverse communication channels, paging channels, control channels, broadcast/multicast channels and any other type of communication channel that may be used to communicate information between the network **104** and the devices **106**.

It should also be noted that aspects of the AD mixer system are suitable for use with virtually any number of devices that communicate with the network **104** via wired and/or wireless communication links.

The AD server **102** comprises AD mixer **112** and AD generator **114**. During operation, the AD server **102** receives or otherwise obtains device/user information **116** that comprises information associated with devices/users that are in communication with the server **102**. For example, the information comprises device location information, user profiles, user histories or other information. In an aspect, device information **116** is determined from one or both of home location register **132** and visiting location register **134**, or any other network entity. The information may also be received directly from the devices **106**.

The AD generator **114** operates to utilize the device information **116** to determine one or more ADs to be transmitted to a particular device. In an aspect, the AD generator **114** received various audio and/or video ADs **118** and uses the device information **116** (i.e, device position, context, and time) to select ADs to be transmitted to the device. For example, the ADs comprise images, text, audio, video, animations, or any other type of AD content. The selected ADs are presented to the AD mixer **112**.

The AD mixer **112** operates to mix the generated ADs with call services **136** provided by the AD server **102**. For example, the call services comprise, but are not limited to, caller ID, call forwarding, three-way calling, call hold, etc. The call services and associated ADs are then provided to a particular device that has requested service or is to receive service. In another aspect, the generated ADs may be provided to the devices **106** in off-peak communications and stored at the devices **106** for later rendering.

The operation of the devices **106** is described with reference to the devices **120** and **122**. The devices **120** and **122** operate to communicate with the network **104**. These communications comprise call related communications and device related communications. Call related communications are those communications associated with call set-up, initiation, reception, transmission or any other call related communication. For example, the device **122** may communicate with the server **102** to initiate a call to the device **120**.

The device related communications are those communications associated with the operation of a particular device. For example, the device communications comprise, but are not limited to, device operating parameters, signal strengths, geographic location indicators, device mobility indicators or other device related information. The device information also comprises user information such as call histories, user profile information or any other type of user information. In an aspect, the call and device information are transmitted from the devices **120** and **122** to the AD server **102** as shown at **124** and **126**, respectively.

### Exemplary Call Processing

The following description describes aspects of the AD mixer system with respect to call processing. For example, the AD mixer system operates when the device **122** places a call to the device **120**. During operation, the devices **120** and **122** provide device information to the server **102**. For example, the device information comprises device location, user profile information or other information.

When the device **122** initiates a call to the device **120**, the AD server **102** begins the process of notifying the device **120** about the incoming call. The AD generator **114** utilizes information about the call initiator (device **122**) to generate one or more ADs to be transmitted to this initiator. The AD generator **114** also utilizes information about the call receiver (device **120**) to generate one or more ADs to be transmitted to this receiver. The generated ADs are determined based on device location, context or time.

The AD mixer **112** operates to mix the determined AD(s) for the call receiver (device **120**) with call services to be provided to that device. For example, a caller ID service may be provided to the device **120** to notify the device **120** that the device **122** is attempting to connect a call. The AD mixer **122** includes the generated AD(s) for the device **120** in the caller ID information that is transmitted to the device **120**, as illustrated at **128**.

Similarly, the AD mixer **112** operates to mix the determined AD(s) for the call initiator (device **122**) with call services to be provided to that device. For example, a CRBT service may be provided to the device **122** to notify the device **122** that the call is being processed. The AD mixer **122** includes the generated AD(s) for the device **122** in the CRBT service that is transmitted to the device **122** as illustrated at **130**.

Each device comprises AD receiver **128**. The AD receiver **128** operates to decode ADs mixed in with call services received from the AD server **102**. For example, the device **120** receives the AD mixed in with the call ID service and the device **122** receives the AD mixed in with the CRBT service. The AD receiver **128** at each device operates to render received ADs using a device display or sound system. For example, the AD receiver **128** at the device **120** renders the AD received with the caller ID service on the device display. The AD receiver **128** at the device **122** renders the AD received with the CRBT service using the device sound system. Thus, each device is assigned ADs based on device location, context and/or time and those ADs are delivered as part of call services provided by the AD server **102**.

In another aspect, ADs are delivered to the devices **106** during off-peak times and stored in an advertisement inbox at each device. When receiving a call service, the AD receiver **128** operates to obtain selected ADs from the advertisement inbox and present these ADs to the device user.

In another aspect, the AD receiver **128** operates to allow device users to interact with the ADs by receiving from the device users key-press responses that are transmitted back to the AD server **102**. These responses allow the device users to obtain additional information about the subject of the AD or perform any other function related to the AD. For example, a device user may be provided with a service discount or extended call times by agreeing to receive and/or view a selected AD.

Therefore, in one or more aspects, an AD mixer system is provided that operates to provide advertisement information to devices in a communication network. It should be noted that the network **100** is just one implementation and that other implementations are possible within the scope of the aspects.

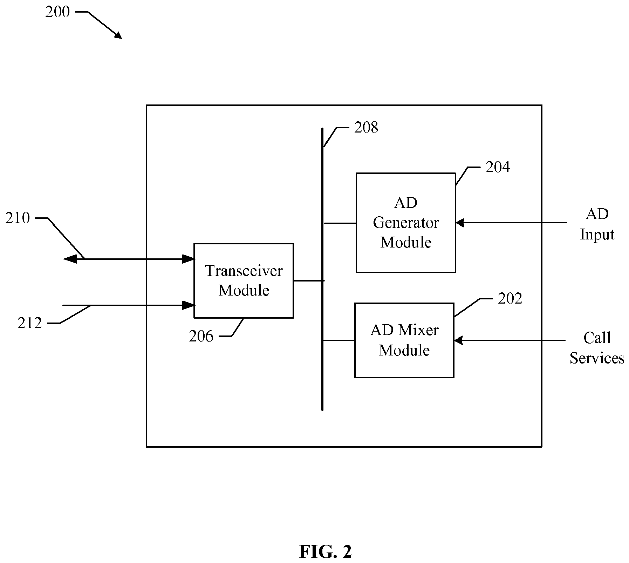

**FIG. 2** shows an exemplary AD server **200** that operates to provide aspects of an AD mixer system. For example, the AD server **200** is suitable for use as the AD server **102** shown in **FIG. 1**. The AD server **200** comprises AD mixer module **202**, AD generator module **204**, and transceiver module **206** all coupled to a data bus **208**. It should be noted that the AD server **200** is just one implementation and that other implementations are possible within the scope of the aspects.

The transceiver module **206** comprises hardware and/or hardware executing software that operates to allow the AD server **200** to communicate data or other information over a network with remote devices or systems. In an aspect, the transceiver module **206** is operable to receive device information from devices in communication with a network via communication link **212**. In an aspect, the device information comprises position indicators, mobility indicators, user profiles and any other device information.

In an aspect, the transceiver module **206** is operable to provide call services to devices in communication with a network via service link **210**. For example, the call services comprise, but are not limited to, caller ID, CBRT, call waiting, call hold, three-way calling, and any other type of call service. For example, a device request to initiate a voice call may be received over the communication link **210**. The communication link **210** may also be used to notify a device about an incoming call. The operation of the transceiver module **206** to obtain device information and provide call services is described in more detail below.

In one or more aspects, the AD mixer module **202** comprises at least one of a CPU, processor, gate array, hardware logic, memory elements, and/or hardware executing software. In an aspect, the AD mixer module **202** operates to receive requests for call services. For example, in an aspect, the requests for call services received by other modules at the AD server **200** and provide to the AD mixer module **202**. The requests for call services identify one or more devices to which the services are to be provided. The AD mixer module **202** operates to send the device identification information to the AD generator module **204**. The AD generator module **204** operates to generate one or more ADs to be provided to the devices in conjunction with the provided call services. The generated ADs are then passes from the AD generator module **204** to the AD mixer module **202**. The AD mixer module **202** operates to mix the ADs with the call services and passes this information to the transceiver module **206** for transmission to the associated devices.

The AD generator module **204** comprises at least one of a CPU, processor, gate array, hardware logic, memory elements, and/or hardware executing software. The AD generator module **204** operates to receive ADs to be mixed with call services. For example, the ADs may be received from another module at the AD server **200**, a network carrier, or a content provider. For example, the ADs comprise images, text, audio, video, animations, or any other type of AD content. The AD generator module **204** receives the identifiers of devices associated with a call service from the AD mixer module **202**. The AD generator module **204** also receives device information from the transceiver module **206**. The AD generator module **204** processes the device identifiers and the device information to select ADs to be provided to devices in conjunction with the call services. A more detailed description of the operation of the AD generator logic **204** is provided below

In an aspect, the AD mixer system comprises a computer program product having one or more program instructions ("instructions") or sets of "codes" stored or embodied on a machine-readable medium. When the codes are executed by at least one processor, for instance, a processor at the AD mixer module **202**, their execution causes the processor to provide the functions of the AD mixer system described herein. For example, the machine-readable medium comprises a floppy disk, CDROM, memory card, FLASH memory device, RAM, ROM, or any other type of memory device or machine-readable medium that interfaces to the AD server **200.** In another aspect, the sets of codes may be downloaded into the AD server **200** from an external device or communication network resource. The sets of codes, when executed, operate to provide aspects of an AD mixer system as described herein.

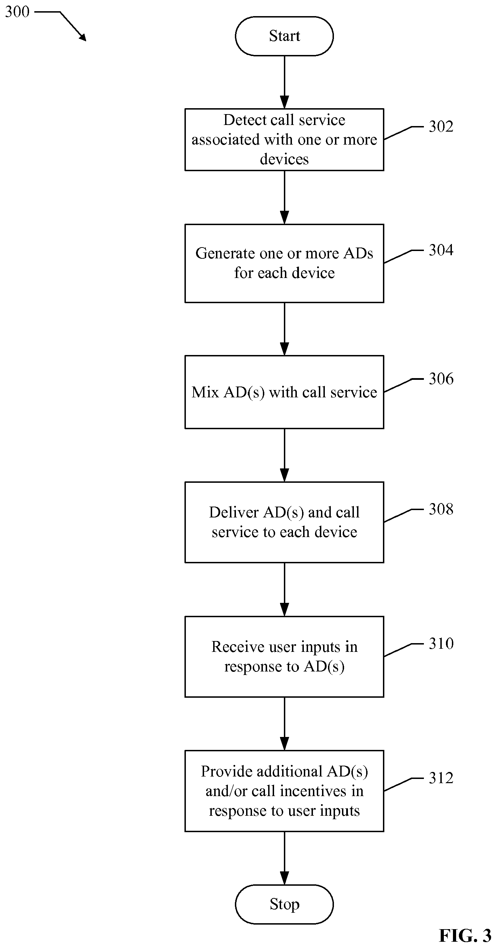

**FIG. 3** shows an exemplary method **300** operable at a server for mixing ADs with call services for use in aspects of an AD mixer system. For clarity, the method **300** is described below with reference to the AD server **200** shown in **FIG. 2**. In an aspect, the AD mixer module **202** executes one or more sets of codes to control the AD server **200** to perform the functions described below.

At block **302**, a call service to be provided to one or more devices is detected. In an aspect, the AD mixer module **202** detects the call service. For example, the call service may be associated with a call initiation, call notification or any other type of call service. Additionally, the call service may be associated with more than one device. For example, the call service may be associated with a three-way call and therefore be associated with three devices. In an aspect, the AD mixer module **202** identifies the devices associated with the call service and passes this information to the AD generator module **204**.

At block **304**, one or more ADs are generated for each device associated with the call service. In an aspect, the AD generator module **204** generates these ADs. For example, if the call service is a caller ID service, an AD is generated for the device that is to receive the call. If the call service is a CRBT service, an AD is generated for the device that initiated the call and is to receive the CRBT.

At block **306**, the generated ADs are mixed with the call services for delivery to devices. In an aspect, the AD mixer module **202** performs this function. For example, the AD mixer module **202** receives the generated ADs from the AD generator module **204** and mixes these ADs with the call service information to be provided to one or more devices. For example, the AD may be video information in a video file that is included with caller ID information that is to be delivered to a device receiving an incoming call. In another aspect, the AD may be audio information in an audio file that is included with CRBT information to be delivered to a device initiating a call.

At block **308**, the mixed ADs and call service is delivered to each device. In an aspect, the transceiver module **206** operates to deliver the mixed ADs and call services to devices using the communication link **210**.

At block **310**, user inputs are received in response to the ADs. For example, user inputs in response to an AD rendered at a communication device are transmitted to the server **200**.

At block **312**, in response to the user inputs additional ADs and/or call incentives are provided. For example, the server 200 operates to select additional ADs and transmit them to the user's device in response to the user's inputs. In another aspect, the server 200 operates to provide one or more call incentives, such as extending the call duration or reducing the cost of the call, based on the user's inputs.

Therefore, the method **300** operates to generate and mix ADs with call services for use in aspects of an AD mixer system. It should be noted that the method **300** is just one implementation and that the operations of the method **300** may be rearranged or otherwise modified within the scope of the various aspects. Thus, other implementations are possible with the scope of the various aspects described herein.

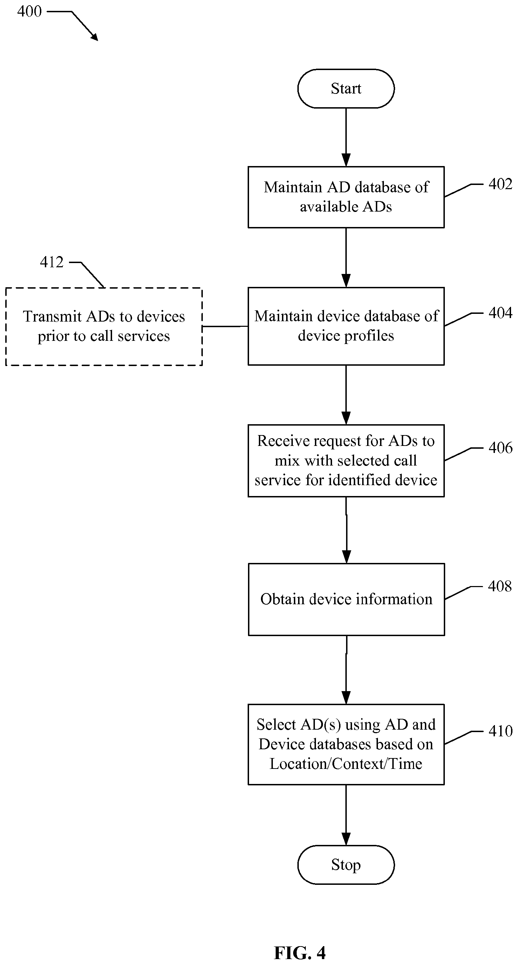

**FIG. 4** shows an exemplary method **400** for generating ADs for use in aspects of an AD mixer system. For example, the method **400** is suitable for use at block **304** of the method **300**. For clarity, the method **400** is described below with reference to the AD server **200** shown in **FIG. 2****.** In an aspect, the AD generator module **204** executes one or more sets of codes to control the AD server **200** to perform the functions described below.

At block **402**, a database of available ADs is maintained. In an aspect, the AD generator module **204** operates to maintain the database of available ADs. For example, the AD generator module **204** obtains ADs from other modules (not shown) at the AD server **200**. The ADs are organized into various categories. For example, the ADs may be organized by location, context, and/or time.

At block **404**, a database of device profiles is maintained. In an aspect, the AD generator module **204** operates to maintain the database of device profiles. For example, the device profiles comprise information about devices in communication with a communication network. In an aspect, the device profiles comprise information such as call histories, home locations, or any other device profile information.

At block **412**, in an optional operation, ADs are transmitted to devices prior to call services. For example, ADs are selected for a particular device and transmitted during off-peak times prior to providing selected call services. The devices store the received ADs in an advertisement inbox for later processing when the selected call services are received.

At block **406**, a request is received for AD(s) to be mixed with call services to be provided to one or more devices. In an aspect, the AD generator module **204** receives this request from the AD mixer module **202**. The request includes an identification of the devices associated with the call services to be provided.

At block **408**, device information is obtained. In an aspect, the AD generator logic **204** obtains device information from the transceiver module **206**. The device information comprises device location, user profile, mobility indicators or any other type of device information.

At block **410**, one or more ADs are selected based on the device information, the AD database, and the device profile database. In an aspect, the AD generator logic **204** operates to select the ADs based on device location, context, or time. For example, ADs may be selected from the AD database based on a device's current location or the current time of day. ADs may also be selected based on context and/or time of day. Once the ADs are generated, the AD generator module **204** forwards the ADs to the AD mixer module **202**.

Therefore, the method **400** operates to generate ADs for use in aspects of an AD mixer system. It should be noted that the method **400** is just one implementation and that the operations of the method **400** may be rearranged or otherwise modified within the scope of the various aspects. Thus, other implementations are possible with the scope of the various aspects described herein.

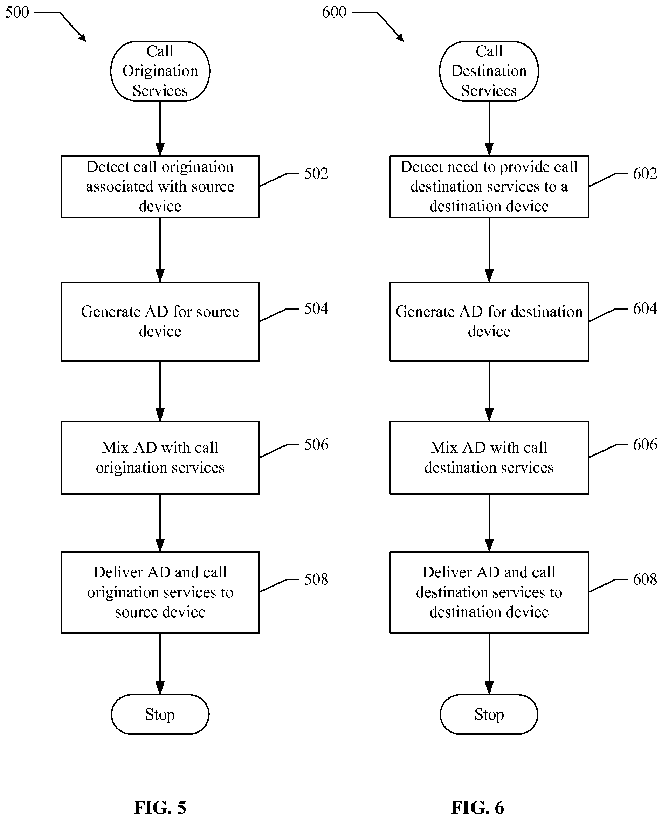

**FIG. 5** shows an exemplary method **500** for providing AD mixing for call origination services for use in aspects of an AD mixer system. For clarity, the method **300** is described below with reference to the AD server **200** shown in **FIG. 2****.** In an aspect, the AD mixer module **202** executes one or more sets of codes to control the AD server **200** to perform the functions described below.

At block **502**, a need for call origination services associated with a source device is detected. For example, call origination services are provided when a source device initiates a call to a destination device. For example, one type of call origination service is a CRBT. In an aspect, the AD mixer module 202 detects that call origination services are needed for the source device.

At block **504**, one or more ADs are generated for the source device. For example, the AD generator module **204** generates the AD(s) in accordance with the method **400** described above.

At block **506**, the generated Ad(s) are mixed with the call origination services. In an aspect, the AD mixer module **202** mixes the generated AD(s) with the call origination services.

At block **508**, the AD(s) and call origination services are delivered to the source device. In an aspect, the transceiver module **206** delivers the AD(s) and call origination services to the source device over the communication link **210**.

Therefore, the method **500** operates to provide AD mixing for call origination services for use in aspects of an AD mixer system. It should be noted that the method **500** is just one implementation and that the operations of the method **500** may be rearranged or otherwise modified within the scope of the various aspects. Thus, other implementations are possible with the scope of the various aspects described herein.

**FIG. 6** shows an exemplary method **600** for providing AD mixing for call destination services for use in aspects of an AD mixer system. For clarity, the method **600** is described below with reference to the AD server **200** shown in **FIG. 2****.** In an aspect, the AD mixer module **202** executes one or more sets of codes to control the AD mixer server **200** to perform the functions described below.

At block **602**, a need for call destination services associated with a destination device is detected. For example, call destination services are provided when a source device initiates a call to a destination device. For example, one type of call destination service is caller ID. In an aspect, the AD mixer module **202** detects that call destination services are needed for the destination device.

At block **604**, one or more ADs are generated for the destination device. For example, the AD generator module **204** generates the AD(s) in accordance with the method **400** described above.

At block **606**, the generated Ad(s) are mixed with the call destination services. In an aspect, the AD mixer module **202** mixes the generated AD(s) with the call destination services.

At block **608**, the AD(s) and call destination services are delivered to the destination device. In an aspect, the transceiver module **206** delivers the AD(s) and call destination services to the destination device over the communication link **210**.

Therefore, the method **600** operates to provide AD mixing for call destination services for use in aspects of an AD mixer system. It should be noted that the method **600** is just one implementation and that the operations of the method **600** may be rearranged or otherwise modified within the scope of the various aspects. Thus, other implementations are possible with the scope of the various aspects described herein.

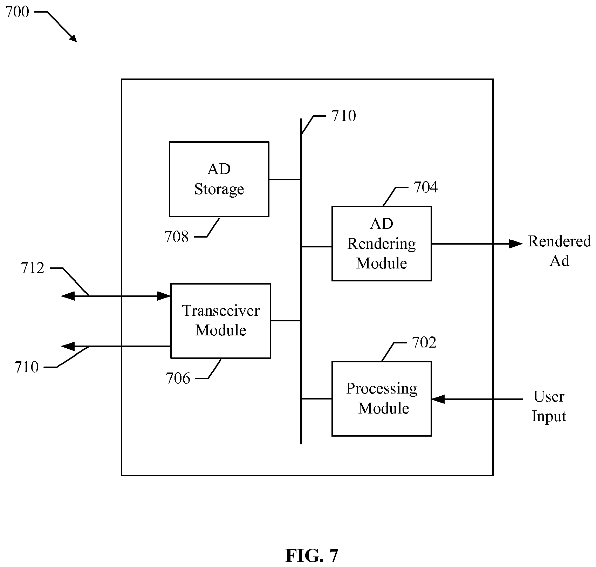

**FIG. 7** shows an exemplary AD receiver **700** for use in aspects of an AD mixer system. For example, the AD receiver **700** is suitable for use as the AD receiver **128** shown in **FIG. 1****.** The AD receiver **700** comprises processing module **702**, AD rendering module **704**, transceiver module **706**, and AD storage module **708** all coupled to a data bus **710**. It should be noted that the AD receiver module **700** represents just one implementation and that other implementations are possible within the scope of the aspects.

The processing module **702** comprises at least one of a CPU, processor, gate array, hardware logic, memory elements, and/or hardware executing software. Thus, the processing module **702** generally comprises logic to execute machine-readable instructions and to control one or more other functional elements of the AD receiver **700** via the data bus **708**.

The AD storage module **708** comprises any suitable storage device operable to store ADs. In an aspect, the AD storage module **708** comprises an AD inbox that is operable to store ADs received with call services and ADs received in off-peak transmissions. The processing module **702** is operable to retrieve ADs from the AD inbox to be associated with one or more call services.

The AD rendering module **704** comprises hardware and/or hardware executing software to allow the AD receiver **700** to render ADs to a device user. For example, the ADs comprise images, text, audio, video, animations, or any other type of AD content that the AD rendering module **704** processes to render to a device user. The ADs are rendered on a device display and/or through a device audio system.

The transceiver module **706** comprises hardware and/or hardware executing software that operates to allow the AD receiver **700** to transmit and receive data, ADs, call services, and any other information with external devices or systems. For example, the transceiver module **706** is operable to transmit device information over a communication link **710** to a network server. In an aspect, the network server is the AD server **102** shown in **FIG. 1****.** The device information comprises a device position, call histories, user profiles, mobility indicators or any other type of device information. In another aspect, the transceiver module **706** is operable to receive call services mixed with ADs over a communication link **712**.

During operation, call services mixed with ADs are received at the transceiver module **760**. The call services may be associated with call initiation or call destination services. The call services are passed to the processing module **702**. The processing module **702** operates to decode the ADs mixed in with the call services and provides the ADs to the AD rendering module **704**. The AD rendering module **704** operates to render the ADs to a device user.

In an aspect, the device user may interact with the ADs by providing user input to the processing module **702**. The user inputs are then transmitted to an network AD server that operates to either provide additional ADs and/or call incentives.

In another aspect, ADs are received prior to call services and stored in the AD inbox. For example, the transceiver module 706 receives the ADs in off-peak transmissions and passes the ADs to the processing module 702 for storage in the AD inbox. When a call service is received, the processing module 702 operates to retrieve ADs associated with the call service from the AD inbox. Thus, ADs may be mixed with a call service or received in advance and stored in the AD inbox for later rendering. A more detailed description of the operation of the AD receiver **700** is provided below.

In an aspect, the AD mixer system comprises a computer program product having one or more program instructions ("instructions") or sets of "codes" stored or embodied on a machine-readable medium. When the codes are executed by at least one processor, for instance, a processor at the processing module **702**, their execution causes the processor to provide the functions of the AD mixer system described herein. For example, the machine-readable medium comprises a floppy disk, CDROM, memory card, FLASH memory device, RAM, ROM, or any other type of memory device or machine-readable medium that interfaces to AD receiver **700**. In another aspect, the sets of codes may be downloaded into the AD receiver **700** from an external device or communication network resource. The sets of codes, when executed, cause the AD receiver **700** to provide aspects of an AD mixer system as described herein.

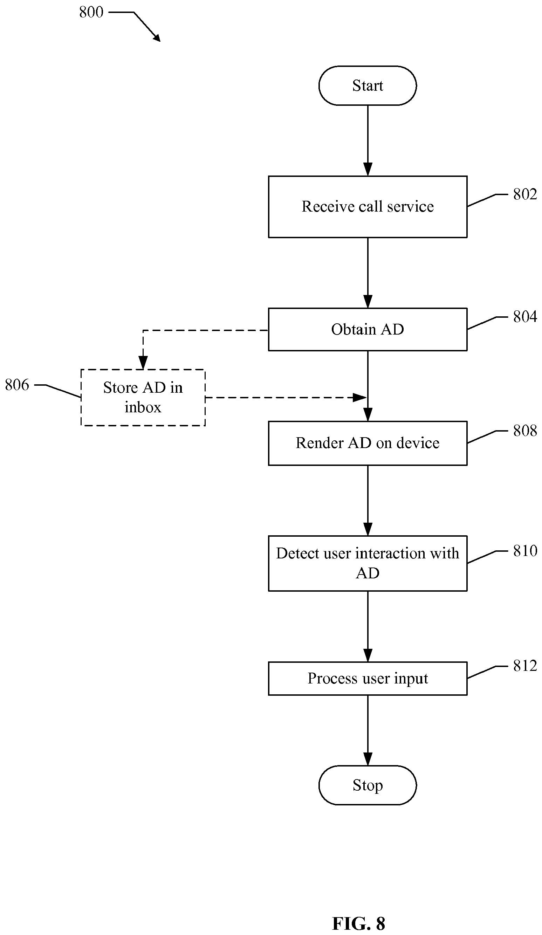

**FIG. 8** shows an exemplary method **800** for receiving ADs for use in aspects of an AD mixer system. For clarity, the method **800** is described below with reference to the AD receiver **700** shown in **FIG. 7****.** In an aspect, the processing module **702** executes one or more sets of codes to control the AD receiver **700** to perform the functions described below.

At block **802**, a call service is received. In an aspect, the transceiver module **706** receives the call service and passes the received information to the processing module **702**. For example, the call service may be a caller ID service or a CRBT service.

At block **804**, an AD associated with the call service is obtained. For example, in one implementation the AD is decoded from the call service information. In another implementation, the AD is retrieve from an AD inbox where it was previously stored. In an aspect, the transceiver module **706** passes the receive call service to the processing module **702** and the processing module **702** operates to obtain the AD that is either mixed in with the received call service or retrieved from the AD inbox.

At block **806**, in an optional operation, the AD is stored for later processing. In an aspect, if the AD is mixed in with the call service, the processing module **702** operates to store the AD in the AD inbox for later rendering.

At block **808**, the AD is rendered. In an aspect, the processing logic **702** passes the AD to the AD rendering module **704** where it is rendered. For example, the AD may be displayed on a device display or played on a device audio system.

At block **810**, user interaction with the AD is detected. In an aspect, once the AD is rendered, a device user may provide user input to interact with the AD. The user input allows the device user to make selections, agree to terms, or initiate any other functions. In an aspect, the processing module **702** operates to receive and process the user input.

At block **812**, the user input is processed. In an aspect, the processing module **702** operates to perform any functions in response to the user input. For example, such functions include, but are not limited to, agreeing to the terms of the AD, transmitting the AD to another party, agreeing to view additional ADs, or any other functions. The processing module **702** works in conjunction with the AD rendering module **704** to allow user interaction with the AD and to provide additional rendered content. In one implementation, the user input is transmitted to an AD server for the purpose of obtaining additional ADs and/or call incentives as described above.

Therefore, the method **800** operates to receive ADs in aspects of an AD mixer system. It should be noted that the method **800** is just one implementation and that the operations of the method **800** may be rearranged or otherwise modified within the scope of the various aspects. Thus, other implementations are possible with the scope of the various aspects described herein.

### Additional Functions

The following is a description of additional functions that are provided by aspects of the AD mixer system. It should be noted that the functions described below are exemplary and that the AD mixer system is operable to combine, modify, or provide virtually any type of AD mixing function. In an aspect, the AD mixer system performs one or more of the following functions based on user input in response to an interactive AD.
1. Requesting a new advertisement
2. Forwarding the advertisement
3. Deleting the advertisement
4. Storing the advertisement
5. Receiving the advertisement while ignoring the call service
6. Receiving the call service while ignoring the advertisement

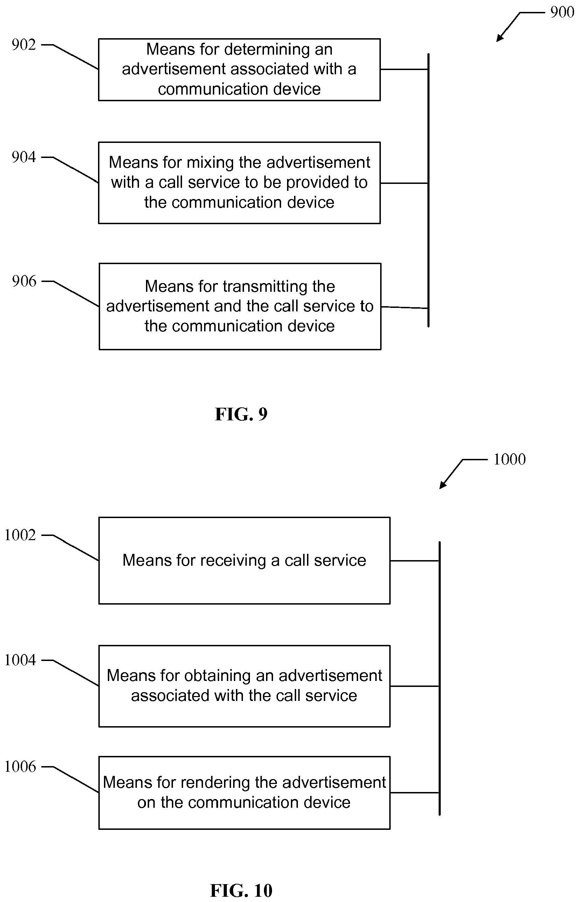

**FIG. 9** shows an exemplary AD server **900** for use in aspects of an AD mixer system. For example, the AD server **900** is suitable for use as the AD server **102** shown in **FIG. 1****.** In an aspect, the server **900** is implemented by at least one integrated circuit comprising one or more modules configured to provide aspects of an AD mixer system as described herein. For example, in an aspect, each module comprises hardware and/or hardware executing software.

The AD server **900** comprises a first module comprising means (**902**) for determining an advertisement associated with a communication device, which in an aspect comprises the AD generator **204**. The AD server **900** also comprises a second module comprising means (**904**) for mixing the advertisement with a call service to be provided to the communication device, which in an aspect comprises the AD mixer **202**. The AD server **900** also comprises a third module comprising means (**906**) for transmitting the advertisement and the call service to the communication device, which in an aspect comprises the transceiver **206**.

**FIG. 10** shows an exemplary AD receiver **1000** for use in aspects of an AD mixer system. For example, the AD receiver **1000** is suitable for use as the AD receiver **128** shown in **FIG. 1****.** In an aspect, the AD receiver **1000** is implemented by at least one integrated circuit comprising one or more modules configured to provide aspects of an AD mixer system as described herein. For example, in an aspect, each module comprises hardware and/or hardware executing software.

The AD receiver **1000** comprises a first module comprising means (**1002**) for receiving a call service, which in an aspect comprises the transceiver module **706**. The AD receiver **1000** also comprises a second module comprising means (**1004**) for obtaining an advertisement associated with the call service, which in an aspect comprises the processing module **702**. The AD receiver **1000** also comprises a third module comprising means (**1006**) for rendering the advertisement on the communication device, which in an aspect comprises the rendering module **704**.

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CDROM, or any other form of storage medium known in the art. An exemplary storage medium is coupled to the processor, such that the processor can read information from, and write information to, the storage medium. In the alternative, the storage medium may be integral to the processor. The processor and the storage medium may reside in an ASIC. The ASIC may reside in a wireless communication device. In the alternative, the processor and the storage medium may reside as discrete components in a wireless communication device.

The description of the disclosed aspects is provided to enable any person skilled in the art to make or use the present invention. Various modifications to these aspects may be readily apparent to those skilled in the art, and the generic principles defined herein may be applied to other aspects, e.g., in an instant messaging service or any general wireless data communication applications, without departing from the spirit or scope of the invention. Thus, the present invention is not intended to be limited to the aspects shown herein but is to be accorded the widest scope consistent with the principles and novel features disclosed herein. The word "exemplary" is used exclusively herein to mean "serving as an example, instance, or illustration." Any aspect described herein as "exemplary" is not necessarily to be construed as preferred or advantageous over other aspects.

Accordingly, while aspects of an AD mixer system have been illustrated and described herein, it will be appreciated that various changes can be made to the aspects without departing from their spirit or essential characteristics. Therefore, the disclosures and descriptions herein are intended to be illustrative, but not limiting, of the scope of the invention, which is set forth in the following claims.
In the following, further examples are described to facilitate the understanding of the invention:
1. A method operable by a network node for providing advertisements in a communication network, the method comprising:
   determining an advertisement associated with a communication device;
   mixing the advertisement with a call service to be provided to the communication device; and
   transmitting the advertisement and the call service to the communication device.
2. The method of example 1, wherein the call service is at least one of a caller identifier service, a call ring-back tone service, a call transfer service, a call hold service, and a call conferencing service.
3. The method of example 1, wherein the advertisement is at least one of a static advertisement and an interactive advertisement.
4. The method of example 1, wherein the advertisement is at least one of a text file, audio file, animation file, and video file.
5. The method of example 1, wherein said determining comprises determining the advertisement based on at least one of a home location register and a visiting location register.
6. The method of example 1, wherein said determining comprises determining the advertisement based on a location indicator associated with the communication device.
7. The method of example 1, wherein said determining comprises determining the advertisement based on a user profile associated with the communication device.
8. The method of example 1, wherein said determining comprises determining the advertisement based on at least one of device location, device context, and time of day associated with the communication device.
9. The method of example 1, further comprising receiving user input in response to the advertisement.
10. The method of example 9, further comprising performing at least one additional function based on the user input, wherein the additional function is selected from a set comprising:
   providing a new advertisement;
   forwarding the advertisement; and
   providing at least one call incentive.
11. The method of example 10, wherein said providing the at least one call incentive comprise selecting the at least one call incentive from a set comprising:
   extending a duration of a call associated with the call service; and
   reducing costs of the call.
12. An apparatus for providing advertisements in a communication network, the apparatus comprising:
   means for determining an advertisement associated with a communication device;
   means for mixing the advertisement with a call service to be provided to the communication device; and
   means for transmitting the advertisement and the call service to the communication device.
13. The apparatus of example 12, wherein the call service is at least one of a caller identifier service, a call ring-back tone service, a call transfer service, a call hold service, and a call conferencing service.
14. The apparatus of example 12, wherein the advertisement is at least one of a static advertisement and an interactive advertisement.
15. The apparatus of example 12, wherein the advertisement is at least one of a text file, audio file, animation file, and video file.
16. The apparatus of example 12, wherein said means for determining comprises means for determining the advertisement based on at least one of a home location register and a visiting location register.
17. The apparatus of example 12, wherein said means for determining comprises means for determining the advertisement based on a location indicator associated with the communication device.
18. The apparatus of example 12, wherein said means for determining comprises means for determining the advertisement based on a user profile associated with the communication device.
19. The apparatus of example 12, wherein said means for determining comprises means for determining the advertisement based on at least one of device location, device context, and time of day associated with the communication device.
20. The apparatus of example 12, further comprising means for receiving user input in response to the advertisement.
21. The apparatus of example 20, further comprising means for performing at least one additional function based on the user input, wherein the additional function is selected from a set comprising:
   providing a new advertisement;
   forwarding the advertisement; and
   providing at least one call incentive.
22. The method of example 21, wherein said providing at least one call incentive comprises selecting the at least one call incentive from a set comprising:
   extending a duration of a call associated with the call service; and
   reducing costs of the call.
23. An apparatus for providing advertisements in a communication network, the apparatus comprising:
   a generator module configured to determine an advertisement associated with a communication device;
   a mixing module configured to mix the advertisement with a call service to be provided to the communication device; and
   a transmitter configured to transmit the advertisement and the call service to the communication device.
24. The apparatus of example 23, wherein the call service is at least one of a caller identifier service, a call ring-back tone service, a call transfer service, a call hold service, and a call conferencing service.
25. The apparatus of example 23, wherein the advertisement is at least one of a static advertisement and an interactive advertisement.
26. The apparatus of example 23, wherein the advertisement is at least one of a text file, audio file, animation file, and video file.
27. The apparatus of example 23, wherein said generator module is configured to determine the advertisement based on at least one of a home location register and a visiting location register.
28. The apparatus of example 23, wherein said generator module is configured to determine the advertisement based on a location indicator associated with the communication device.
29. The apparatus of example 23, wherein said generator module is configured to determine the advertisement based on a user profile associated with the communication device.
30. The apparatus of example 23, wherein said generator module is configured to determine the advertisement based on at least one of location, device context, and time of day associated with the communication device.
31. The apparatus of example 23, wherein said mixer module is configured to receive user input in response to the advertisement.
32. The apparatus of example 31, wherein said mixer module is configured to perform at least one additional function based on the user input, wherein the additional function is selected from a set comprising:
   providing a new advertisement;
   forwarding the advertisement; and
   providing at least one call incentive.
33. The apparatus of example 32, wherein said mixer module is configured to select the at least one call incentive from a set comprising:
   extending a duration of a call associated with the call service; and
   reducing costs of the call.
34. A computer program product for providing advertisements in a communication network, the computer program product comprising:
   a computer-readable medium embodying codes executable to:
      determine an advertisement associated with a communication device;
      mix the advertisement with a call service to be provided to the communication device; and
      transmit the advertisement and the call service to the communication device.
35. The computer-readable medium of example 34, wherein the call service is at least one of a caller identifier service, a call ring-back tone service, a call transfer service, a call hold service, and a call conferencing service.
36. The computer-readable medium of example 34, wherein the advertisement is at least one of a static advertisement and an interactive advertisement.
37. The computer-readable medium of example 34, wherein the advertisement is at least one of a text file, audio file, animation file, and video file.
38. The computer-readable medium of example 34, wherein said codes are configured to determine the advertisement based on at least one of a home location register and a visiting location register.
39. The computer-readable medium of example 34, wherein said codes are configured to determine the advertisement based on a location indicator associated with the communication device.
40. The computer-readable medium of example 34, wherein said codes are configured to determine the advertisement based on a user profile associated with the communication device.
41. The computer-readable medium of example 34, wherein said codes are configured to determine the advertisement based on at least one of device location, device context, and time of day associated with the communication device.
42. The computer-readable medium of example 34, wherein said codes are configured to receive user input in response to the advertisement.
43. The computer-readable medium of example 42, wherein said codes are configured to perform at least one additional function based on the user input, wherein the additional function is selected from a set comprising:
   providing a new advertisement;
   forwarding the advertisement; and
   providing at least one call incentive.
44. The computer-readable medium of example 43, wherein said codes are configured to select the at least one call incentive from a set comprising:
   extending a duration of a call associated with the call service; and
   reducing costs of the call.
45. A method operable by a communication device for providing advertisements in a communication network, the method comprising:
   receiving a call service;
   obtaining an advertisement associated with the call service; and
   rendering the advertisement on the communication device.
46. The method of example 45, wherein said obtaining comprises:
   receiving the advertisement mixed with the call service; and
   obtaining the advertisement from the call service.
47. The method of example 45, wherein said obtaining comprises:
   maintaining an advertisement inbox;
   storing one or more advertisements in an advertisement inbox;
   identifying the advertisement in the inbox based on the call service; and
   retrieving the advertisement from the advertisement inbox.
48. The method of example 45, wherein the call service is at least one of a caller identifier service, a call ring-back tone service, a call transfer service, a call hold service, and a call conferencing service.
49. The method of example 45, wherein the advertisement is at least one of a static advertisement and an interactive advertisement.
50. The method of example 45, wherein the advertisement is at least one of a text file, audio file, animation file, and video file.
51. The method of example 45, further comprising transmitting device location information to be used to select the advertisement.
52. The method of example 45, further comprising receiving user input in response to the advertisement.
53. The method of example 52, further comprising performing at least one additional function based on the user input, wherein the additional function is selected from a set comprising:
   requesting a new advertisement;
   forwarding the advertisement;
   deleting the advertisement;
   storing the advertisement;
   agreeing to the terms of the advertisement;
   receiving the advertisement while ignoring the call service; and
   receiving the call service while ignoring the advertisement.
54. The method of example 52, further comprising receiving at least one call incentive based on the user input, wherein the at least one call incentive is selected from a set comprising:
   extending a duration of a call associated with a call service; and
   reducing costs of the call.
55. An apparatus for providing advertisements in a communication network, the apparatus comprising:
   means for receiving a call service;
   means for obtaining an advertisement associated with the call service; and
   means for rendering the advertisement.
56. The apparatus of example 55, wherein said means for obtaining comprises:
   means for receiving the advertisement mixed with the call service; and
   means for obtaining the advertisement from the call service.
57. The apparatus of example 55, wherein said means for obtaining comprises:
   means for maintaining an advertisement inbox;
   means for storing one or more advertisements in an advertisement inbox;
   means for identifying the advertisement in the inbox based on the call service; and
   means for retrieving the advertisement from the advertisement inbox.
58. The apparatus of example 55, wherein the call service is at least one of a caller identifier service, a call ring-back tone service, a call transfer service, a call hold service, and a call conferencing service.
59. The apparatus of example 55, wherein the advertisement is at least one of a static advertisement and an interactive advertisement.
60. The apparatus of example 55, wherein the advertisement is at least one of a text file, audio file, animation file, and video file.
61. The apparatus of example 55, further comprising means for transmitting device location information to be used to select the advertisement.
62. The apparatus of example 55, further comprising means for receiving user input in response to the advertisement.
63. The apparatus of example 62, further comprising means for performing at least one additional function based on the user input, wherein the additional function is selected from a set comprising:
   requesting a new advertisement;
   forwarding the advertisement;
   deleting the advertisement;
   storing the advertisement;
   agreeing to the terms of the advertisement;
   receiving the advertisement while ignoring the call service; and
   receiving the call service while ignoring the advertisement.
64. The apparatus of example 62, further comprising means for receiving at least one call incentive based on the user input, wherein the at least one call incentive is selected from a set comprising:
   extending a duration of a call associated with a call service; and
   reducing costs of the call.
65. An apparatus for providing advertisements in a communication network, the apparatus comprising:
   a receiver configured to receive a call service;
   processing module configured to obtain an advertisement associated with the call service; and
   rendering module configured to render the advertisement.
66. The apparatus of example 65, wherein said processing module is configured to:
   receive the advertisement mixed with the call service; and
   obtain the advertisement from the call service.
67. The apparatus of example 65, wherein said processing module is configured to:
   maintain an advertisement inbox;
   store one or more advertisements in an advertisement inbox;
   identify the advertisement in the inbox based on the call service; and
   retrieve the advertisement from the advertisement inbox.
68. The apparatus of example 65, wherein the call service is at least one of a caller identifier service, a call ring-back tone service, a call transfer service, a call hold service, and a call conferencing service.
69. The apparatus of example 65, wherein the advertisement is at least one of a static advertisement and an interactive advertisement.
70. The apparatus of example 65, wherein the advertisement is at least one of a text file, audio file, animation file, and video file.
71. The apparatus of example 65, further comprising a transmitter configured to transmit device location information to be used to select the advertisement.
72. The apparatus of example 65, wherein said processing module is configured to receive user input in response to the advertisement.
73. The apparatus of example 72, wherein said processing module is configured to perform at least one additional function based on the user input, wherein the additional function is selected from a set comprising:
   requesting a new advertisement;
   forwarding the advertisement;
   deleting the advertisement;
   storing the advertisement;
   agreeing to the terms of the advertisement;
   receiving the advertisement while ignoring the call service; and
   receiving the call service while ignoring the advertisement.
74. The apparatus of example 72, wherein said processing module is configured to receive at least one call incentive based on the user input, wherein the at least one call incentive is selected from a set comprising:
   extending a duration of a call associated with a call service; and
   reducing costs of the call.
75. A computer program product for providing advertisements in a communication network, the computer program product comprising:
   a computer-readable medium embodying codes executable to:
      receive a call service;
      obtain an advertisement associated with the call service; and
      render the advertisement.
76. The computer-readable medium of example 75, wherein said codes are configured to:
   receive the advertisement mixed with the call service; and
   obtain the advertisement from the call service.
77. The computer-readable medium of example 75, wherein said codes are configured to:
   maintain an advertisement inbox;
   store one or more advertisements in an advertisement inbox;
   identify the advertisement in the inbox based on the call service; and
   retrieve the advertisement from the advertisement inbox.
78. The computer-readable medium of example 75, wherein the call service is at least one of a caller identifier service, a call ring-back tone service, a call transfer service, a call hold service, and a call conferencing service.
79. The computer-readable medium of example 75, wherein the advertisement is at least one of a static advertisement and an interactive advertisement.
80. The computer-readable medium of example 75, wherein the advertisement is at least one of a text file, audio file, animation file, and video file.
81. The computer-readable medium of example 75, wherein said codes are configured to transmit device location information to be used to select the advertisement.
82. The computer-readable medium of example 75, wherein said codes are configured to receive user input in response to the advertisement.
83. The computer-readable medium of example 82, wherein said codes are configured to perform at least one additional function based on the user input, wherein the additional function is selected from a set comprising:
   requesting a new advertisement;
   forwarding the advertisement;
   deleting the advertisement;
   storing the advertisement;
   agreeing to the terms of the advertisement;
   receiving the advertisement while ignoring the call service; and
   receiving the call service while ignoring the advertisement.
84. The computer-readable medium of example 82, wherein said codes are configured to receive at least one call incentive based on the user input, wherein the at least one call incentive is selected from a set comprising:
   extending a duration of a call associated with a call service; and
   reducing costs of the call.

## Claims

1. A method operable by a network node for providing advertisements in a communication network (100), the method comprising:
determining an advertisement associated with a callee communication device (110, 120, 122);
transmitting the advertisement to the callee communication device (110, 120, 122) during off-peak times of the communication network (100) and prior to transmitting a call service to the callee communication device (110, 120, 122) for storing at the callee communication device (110, 120, 122) for later rendering when receiving the call service; and transmitting the call service to the callee communication device (110, 120, 122).

2. The method of claim 1, wherein said determining comprises determining the advertisement based on a user profile associated with the callee communication device (110, 120, 122).

3. The method of claim 1, further comprising receiving user input in response to the advertisement and performing at least one additional function based on the user input, wherein the additional function is selected from a set comprising:
providing a new advertisement;
forwarding the advertisement; and
providing at least one call incentive.

4. The method of claim 3, wherein said providing the at least one call incentive further comprises:
extending a duration of the call associated with the call service.

5. An apparatus (102) for providing advertisements in a communication network (100), the apparatus (102) comprising:
means for determining an advertisement associated with a callee communication device (110, 120, 122);
wherein the apparatus (102) is adapted to:
transmit the advertisement to the callee communication device (110, 120, 122) during off-peak times of the communication network (100) and prior to transmitting a call service to the callee communication device (110, 120, 122) for storing at the callee communication device (110, 120, 122) for later rendering when receiving the call service; and
transmit the call service to the callee communication device (110, 120, 122).

6. The apparatus (102) of claim 5, further comprising means for receiving user input in response to the advertisement and means for performing at least one additional function based on the user input, wherein the additional function is selected from a set comprising:
providing a new advertisement;
forwarding the advertisement; and
providing at least one call incentive.

7. The apparatus (102) of claim 6, wherein said providing at least one call incentive further comprises:
extending a duration of a call associated with the call service.

8. A method operable by a callee communication device (110, 120, 122) for obtaining advertisements in a communication network (100), the method comprising:
receiving an advertisement during off-peak times of the communication network (100) and prior to receiving a call service at the callee communication device (110,120,122) and storing said advertisement at the callee communication device (110, 120, 122) for later rendering;
receiving, by a transceiver (206), a call service;
obtaining the stored advertisement associated with the call service;
rendering the advertisement on the callee communication device (110, 120, 122).

9. The method of claim 8, wherein said obtaining comprises:
maintaining an advertisement inbox;
storing one or more advertisements in an advertisement inbox;
identifying the advertisement in the inbox based on the call service; and
retrieving the advertisement from the advertisement inbox.

10. The method of claim 8, further comprising performing at least one additional function based on the user input, wherein the additional function is selected from a set comprising:
requesting a new advertisement;
forwarding the advertisement;
deleting the advertisement;
storing the advertisement;
agreeing to the terms of the advertisement;
receiving the advertisement while ignoring the call service; and
receiving the call service while ignoring the advertisement.

11. The method of claim 8, further comprising receiving user input and receiving at least one call incentive based on wherein the at least one call incentive further comprises:
extending a duration of the call associated with the call service.

12. An apparatus (110, 120, 122) for obtaining advertisements in a communication network (100), wherein the apparatus (110, 120, 122) is adapted to:
receive an advertisement during off-peak times of the communication network (100) and prior to receiving a call service at the callee communication device (110,120,122) and store said advertisement for later rendering;
receiving a call service;
obtaining the stored advertisement associated with the call service; and
render the advertisement.

13. The apparatus (110, 120, 122) of claim 12, further comprising means for receiving user input in response to the advertisement and means for performing at least one additional function based on the user input, wherein the additional function is selected from a set comprising:
requesting a new advertisement;
forwarding the advertisement;
deleting the advertisement;
storing the advertisement;
agreeing to the terms of the advertisement;
receiving the advertisement while ignoring the call service; and
receiving the call service while ignoring the advertisement.

14. The apparatus (110, 120, 122) of claim 12, wherein the at least one call incentive further comprises:
extending a duration of a call associated with a call service.

15. A computer-readable storage medium storing code to perform the steps of any of the claims 1 to 4 or 8 to 11 if executed on a computer.

## Patentansprüche

1. Ein von einem Netzwerkknoten zur Bereitstellung von Werbung in einem Kommunikationsnetzwerk (100) betreibbares Verfahren, wobei das Verfahren aufweist:
Bestimmen einer Werbung, die einer angerufenen Kommunikationsvorrichtung (110, 120, 122) zugeordnet ist;
Übertragen der Werbung an die angerufene Kommunikationsvorrichtung (110, 120, 122) während Off-Peak-Zeiten des Kommunikationsnetzwerks (100) und vor dem Übertragen eines Anrufdienstes an die angerufene Kommunikationsvorrichtung (110, 120, 122) zum Speichern an der angerufenen Kommunikationsvorrichtung (110, 120, 122) zum späteren Wiedergeben, wenn der Anrufdienst empfangen wird; und
Übertragen des Anrufdienstes an die angerufene Kommunikationsvorrichtung (110, 120, 122).

2. Das Verfahren gemäß Anspruch 1, wobei das Bestimmen aufweist: Bestimmen der Werbung basierend auf einem Benutzerprofil, das der angerufenen Kommunikationsvorrichtung (110, 120, 122) zugeordnet ist.

3. Das Verfahren gemäß Anspruch 1, ferner aufweisend: Empfangen einer Benutzereingabe in Antwort auf die Werbung und Durchführen mindestens einer zusätzlichen Funktion basierend auf der Benutzereingabe, wobei die zusätzliche Funktion aus einem Satz ausgewählt wird, der aufweist:
Bereitstellen einer neuen Werbung;
Weiterleiten der Werbung; und
Bereitstellen von mindestens einem Anrufanreiz.

4. Das Verfahren gemäß Anspruch 3, wobei das Bereitstellen des mindestens einen Anrufanreizes ferner aufweist:
Verlängern einer Dauer des Anrufs, der dem Anrufdienst zugeordnet ist.

5. Eine Vorrichtung (102) zum Bereitstellen von Werbung in einem Kommunikationsnetzwerk (100), wobei die Vorrichtung (102) aufweist:
Mittel zum Bestimmen einer Werbung, die einer angerufenen Kommunikationsvorrichtung (110, 120, 122) zugeordnet ist;
wobei die Vorrichtung (102) angepasst ist zum:
Übertragen der Werbung an die angerufene Kommunikationsvorrichtung (110, 120, 122) während Off-Peak-Zeiten des Kommunikationsnetzwerks (100) und vor dem Übertragen eines Anrufdienstes an die angerufene Kommunikationsvorrichtung (110, 120, 122) zum Speichern an der angerufenen Kommunikationsvorrichtung (110, 120, 122) für ein späteres Wiedergeben, wenn der Anrufdienst empfangen wird; und
Übertragen des Anrufdienstes an die angerufene Kommunikationsvorrichtung (110, 120, 122).

6. Die Vorrichtung (102) gemäß Anspruch 5, ferner aufweisend:
Mittel zum Empfangen einer Benutzereingabe in Antwort auf die Werbung und Mittel zum Durchführen mindestens einer zusätzlichen Funktion basierend auf der Benutzereingabe, wobei die zusätzliche Funktion aus einem Satz ausgewählt ist, der aufweist:
Bereitstellen einer neuen Werbung;
Weiterleiten der Werbung; und
Bereitstellen mindestens eines Anrufanreizes.

7. Die Vorrichtung (102) gemäß Anspruch 6, wobei das Bereitstellen mindestens eines Anrufanreizes ferner aufweist:
Verlängern einer Dauer eines Anrufs, der dem Anrufdienst zugeordnet ist.

8. Ein von einer angerufenen Kommunikationsvorrichtung (110, 120, 122) zum Erhalten von Werbung in einem Kommunikationsnetzwerk (100) betreibbares Verfahren, wobei das Verfahren aufweist:
Empfangen einer Werbung während Off-Peak-Zeiten des Kommunikationsnetzwerks (100) und vor Empfangen eines Anrufdienstes an der angerufenen Kommunikationsvorrichtung (110, 120, 122) und Speichern der Werbung an der angerufenen Kommunikationsvorrichtung (110, 120, 122) zum späteren Wiedergeben;
Empfangen, durch einen Transceiver (206), eines Anrufdienstes;
Erhalten der gespeicherten Werbung, die dem Anrufdienst zugeordnet ist;
Wiedergeben der Werbung auf der angerufenen Kommunikationsvorrichtung (110, 120, 122).

9. Das Verfahren gemäß Anspruch 8, wobei das Erhalten aufweist:
Unterhalten eines Werbungsposteingangs;
Speichern einer oder mehrerer Werbungen in einem Werbeposteingang;
Identifizieren der Werbung in dem Posteingang basierend auf dem Anrufdienst; und
Abrufen der Werbung aus dem Werbeposteingang.

10. Das Verfahren gemäß Anspruch 8, ferner aufweisend: Durchführen mindestens einer zusätzlichen Funktion basierend auf der Benutzereingabe, wobei die zusätzliche Funktion aus einem Satz ausgewählt wird, der aufweist:
Anfordern einer neuen Werbung;
Weiterleiten der Werbung;
Löschen der Werbung;
Speichern der Werbung;
Zustimmen zu den Bedingungen der Werbung;
Empfangen der Werbung, während der Anrufdienst ignoriert wird; und
Empfangen des Anrufdienstes, während die Werbung ignoriert wird.

11. Das Verfahren gemäß Anspruch 8, ferner aufweisend: Empfangen von Benutzereingaben und Empfangen von mindestens einem Anrufanreiz basierend auf, wobei der mindestens eine Anrufanreiz ferner aufweist:
Verlängern einer Dauer des Anrufs, der dem Anrufdienst zugeordnet ist.

12. Eine Vorrichtung (110, 120, 122) zum Erhalten von Werbung in einem Kommunikationsnetzwerk (100), wobei die Vorrichtung (110, 120, 122) angepasst ist zum:
Empfangen einer Werbung während Off-Peak-Zeiten des Kommunikationsnetzwerks (100) und vor dem Empfangen eines Anrufdienstes an der angerufenen Kommunikationsvorrichtung (110, 120, 122) und Speichern der Werbung für ein späteres Wiedergeben;
Empfangen eines Anrufdienstes;
Erhalten der gespeicherten Werbung, die dem Anrufdienst zugeordnet ist; und
Wiedergeben der Werbung.

13. Die Vorrichtung (110, 120, 122) gemäß Anspruch 12, ferner aufweisend:
Mittel zum Empfangen von Benutzereingaben in Antwort auf die Werbung und Mittel zum Durchführen mindestens einer zusätzlichen Funktion basierend auf den Benutzereingaben, wobei die zusätzliche Funktion aus einem Satz ausgewählt wird, der aufweist:
Anfordern einer neuen Werbung;
Weiterleiten der Werbung;
Löschen der Werbung;
Speichern der Werbung;
Zustimmen zu den Bedingungen der Werbung;
Empfangen der Werbung, während der Anrufdienst ignoriert wird; und
Empfangen des Anrufdienstes, während die Werbung ignoriert wird.

14. Die Vorrichtung (110, 120, 122) gemäß Anspruch 12, wobei der mindestens eine Anrufanreiz ferner aufweist:
Verlängern einer Dauer eines Anrufs, der einem Anrufdienst zugeordnet ist.

15. Ein computerlesbares Speichermedium, welches Code speichert zum Ausführen der Schritte irgendeines der Ansprüche 1 bis 4 oder 8 bis 11, wenn er auf einem Computer ausgeführt wird.

## Revendications

1. Procédé utilisable par un noeud de réseau pour fournir des annonces dans un réseau de communication (100), le procédé comprenant :
la détermination d'une annonce associée à un dispositif de communication d'appelé (110, 120, 122) ;
la transmission de l'annonce au dispositif de communication d'appelé (110, 120, 122) durant des temps hors pointe du réseau de communication (100) et avant la transmission d'un service d'appel au dispositif de communication d'appelé (110, 120, 122) aux fins de stockage dans le dispositif de communication d'appelé (110, 120, 122) pour restitution ultérieure lors de la réception du service d'appel ; et
la transmission du service d'appel au dispositif de communication d'appelé (110, 120, 122).

2. Procédé selon la revendication 1, dans lequel ladite détermination comprend la détermination de l'annonce sur la base d'un profil d'utilisateur associé au dispositif de communication d'appelé (110, 120, 122).

3. Procédé selon la revendication 1, comprenant en outre la réception d'une entrée utilisateur en réponse à l'annonce et l'exécution d'au moins une fonction supplémentaire sur la base de l'entrée utilisateur, dans lequel la fonction supplémentaire est sélectionnée parmi un ensemble comprenant :
la fourniture d'une nouvelle annonce ;
le transfert de l'annonce ; et
la fourniture d'au moins une incitation d'appel.

4. Procédé selon la revendication 3, dans lequel ladite fourniture de l'au moins une incitation d'appel comprend en outre :
la prolongation d'une durée de l'appel associé au service d'appel.

5. Appareil (102) pour fournir des annonces dans un réseau de communication (100), l'appareil (102) comprenant :
un moyen pour déterminer une annonce associée à un dispositif de communication d'appelé (110, 120, 122) ;
dans lequel l'appareil (102) est adapté pour :
transmettre l'annonce au dispositif de communication d'appelé (110, 120, 122) durant des temps hors pointe du réseau de communication (100) et avant la transmission d'un service d'appel au dispositif de communication d'appelé (110, 120, 122) aux fins de stockage dans le dispositif de communication d'appelé (110, 120, 122) pour restitution ultérieure lors de la réception du service d'appel ; et
transmettre le service d'appel au dispositif de communication d'appelé (110, 120, 122).

6. Appareil (102) selon la revendication 5, comprenant en outre un moyen pour recevoir une entrée utilisateur en réponse à l'annonce et un moyen pour exécuter au moins une fonction supplémentaire sur la base de l'entrée utilisateur, dans lequel la fonction supplémentaire est sélectionnée parmi un ensemble comprenant :
la fourniture d'une annonce ;
le transfert de l'annonce ; et
la fourniture d'au moins une incitation d'appel.

7. Appareil (102) selon la revendication 6, dans lequel ladite fourniture d'au moins une incitation d'appel comprend en outre :
la prolongation d'une durée d'un appel associé au service d'appel.

8. Procédé utilisable par un dispositif de communication d'appelé (110, 120, 122) pour obtenir des annonces dans un réseau de communication (100), le procédé comprenant :
la réception d'une annonce durant des temps hors pointe du réseau de communication (100) et avant la réception d'un service d'appel dans le dispositif de communication d'appelé (110, 120, 122) et le stockage de ladite annonce dans le dispositif de communication d'appelé (110, 120, 122) pour restitution ultérieure ;
la réception, par un émetteur-récepteur (206), d'un service d'appel ;
l'obtention de l'annonce stockée associée au service d"appel ;
la restitution de l'annonce sur le dispositif de communication d'appelé (110, 120, 122).

9. Procédé selon la revendication 8, dans lequel ladite obtention comprend :
la tenue à jour d'une boite de réception d'annonces ;
le stockage d'une ou de plusieurs annonces dans une boite de réception d'annonces ;
l'identification de l'annonce dans la boite de réception sur la base du service d'appel ; et
la récupération de l'annonce dans la boite de réception d'annonces.

10. Procédé selon la revendication 8, comprenant en outre l'exécution d'au moins une fonction supplémentaire sur la base de l'entrée utilisateur, dans lequel la fonction supplémentaire est sélectionnée parmi un ensemble comprenant :
la demande d'une nouvelle annonce ;
le transfert de l'annonce ;
la suppression de l'annonce ;
le stockage de l'annonce ;
l'acceptation des termes de l'annonce ;
la réception de l'annonce tout en ignorant le service d'appel ; et
la réception du service d'appel tout en ignorant l'annonce.

11. Procédé selon la revendication 8, comprenant en outre la réception d'une entrée utilisateur et la réception d'au moins une incitation d'appel sur la base du fait que l'au moins une incitation d'appel comprend en outre :
la prolongation d'une durée de l'appel associé au service d'appel.

12. Appareil (110, 120, 122) pour obtenir des annonces dans un réseau de communication (100), dans lequel l'appareil (110, 120, 122) est adapté pour :
recevoir une annonce durant des temps hors pointe du réseau de communication (100) et avant la réception d'un service d'appel dans le dispositif de communication d'appelé (110, 120, 122) et stocker ladite annonce pour restitution ultérieure ;
recevoir un service d'appel ;
obtenir l'annonce stockée associée au service d'appel ; et
restituer l'annonce.

13. Appareil (110, 120, 122) selon la revendication 12, comprenant en outre
un moyen pour recevoir une entrée utilisateur en réponse à l'annonce et
un moyen pour exécuter au moins une fonction supplémentaire sur la base de l'entrée utilisateur, dans lequel la fonction supplémentaire est sélectionnée parmi un ensemble comprenant :
la demande d'une nouvelle annonce ;
le transfert de l'annonce ;
la suppression de l'annonce ;
le stockage de l'annonce ;
l'acceptation des termes de l'annonce ;
la réception de l'annonce tout en ignorant le service d'appel ; et
la réception du service d'appel tout en ignorant l'annonce.

14. Appareil (110, 120, 122) selon la revendication 12, dans lequel l'au moins une incitation d'appel comprend en outre :
la prolongation d'une durée d'un appel associé à un service d'appel.

15. Support de stockage lisible par ordinateur stockant du code pour exécuter les étapes de l'une quelconque des revendications 1 à 4 ou 8 à 11 s'il est exécuté sur un ordinateur.
